(19) Europäisches Patentamt
European Patent Office
Office européen des brevets

(11) EP 1 098 429 B1

# (12) EUROPÄISCHE PATENTSCHRIFT

(45) Veröffentlichungstag und Bekanntmachung des Hinweises auf die Patenterteilung:
**06.10.2004 Patentblatt 2004/41**

(51) Int Cl.[7]: **H02N 2/10**, H01L 41/09

(21) Anmeldenummer: **00122612.5**

(22) Anmeldetag: **17.10.2000**

## (54) Elektromechanischer Motor

Electromechanical motor

Moteur électromécanique

(84) Benannte Vertragsstaaten:
**DE ES FR GB IT SE**

(30) Priorität: **03.11.1999 DE 19952946**

(43) Veröffentlichungstag der Anmeldung:
**09.05.2001 Patentblatt 2001/19**

(73) Patentinhaber: **SIEMENS AKTIENGESELLSCHAFT**
**80333 München (DE)**

(72) Erfinder:
- **Gottlieb, Bernhard, Dr.**
**81739 München (DE)**
- **Kappel, Andreas, Dr.**
**85649 Brunnthal (DE)**

(56) Entgegenhaltungen:
**WO-A-97/26702**
**WO-A-97/47078**
**DE-A- 3 719 362**
**DE-A- 3 920 726**
**DE-A- 4 435 996**
**DE-A- 19 746 609**
**DE-A- 19 820 514**
**DE-C- 19 535 481**
**US-A- 4 888 515**
**US-A- 5 079 471**

- **PATENT ABSTRACTS OF JAPAN vol. 009, no. 325 (E-368), 20. Dezember 1985 (1985-12-20) & JP 60 156283 A (TOUHOKU KINZOKU KOGYO KK), 16. August 1985 (1985-08-16)**
- **PATENT ABSTRACTS OF JAPAN vol. 012, no. 254 (E-634), 16. Juli 1988 (1988-07-16) & JP 63 039478 A (NISSAN MOTOR CO LTD), 19. Februar 1988 (1988-02-19)**
- **PATENT ABSTRACTS OF JAPAN vol. 016, no. 091 (E-1174), 5. März 1992 (1992-03-05) & JP 03 273871 A (NEC CORP), 5. Dezember 1991 (1991-12-05)**
- **PATENT ABSTRACTS OF JAPAN vol. 1999, no. 03, 31. März 1999 (1999-03-31) & JP 10 337059 A (SEIKO INSTR INC), 18. Dezember 1998 (1998-12-18)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 098 429 B1

## Beschreibung

Die Erfindung betrifft einen elektromechanischen Motor, ein Verfahren zum Betrieb desselben und eine Verwendung des elektromechanischen Motors.

Vor allem ist ein Piezomotor in Form eines Wanderwellenmotors und eines stößelangetriebenen Piezomotors bekannt. Während ersterer immer resonant betrieben werden muß, kann der stößelangetriebene Piezomotor sowohl resonant als auch nicht resonant betrieben werden. Ein Piezomotor besitzt als Vorteil

- ein hohes Drehmoment, und daß er langsamdrehend ist, so daß ein Übersetzungsgetriebe entfallen kann,
- eine kurze Hochlauf- und Stopzeit im Millisekundenbereich,
- eine Selbsthemmung, d.h. daß eine Position einer Antriebswelle nach dem Abschalten auch bei Einwirkung äußerer Momente erhalten bleibt,
- eine geringe Masse, was Leichtbau z.B. im Kraftfahrzeug ermöglicht,
- ein geringes Bauvolumen, auch aufgrund des nicht benötigten Übersetzungsgetriebes,
- er nahezu keine elektromagnetischen Streufelder emittiert,
- einen hoher Wirkungsgrad, und
- eine Möglichkeit der Lastdetektion mittels des Piezoaktors/-sensors.

Die Nachteile eines piezoelektrischen Wanderwellenmotors sind hoher Verschleiß durch Friktionsantrieb, hohe Herstellungskosten aufgrund der erforderlichen mechanischen Präzision, die dauerhaft eingehalten werden muß, eine fehlende Skalierbarkeit aufgrund des Wanderwellenprinzips, und eine Beschränkung auf eine relativ kleine Baugröße.

Die Nachteile eines stößelangetriebenen Piezomotors sind ein hoher Verschleiß durch Friktionsantrieb, eine hohe Geräuschentwicklung aufgrund des Impacts eines Antriebsstößels auf eine Welle , durch eine hohe mechanische Präzision bedingte hohe Herstellungskosten und ein Schlupf, d.h. daß bei Einwirkung rücktreibender Momente die Welle in der Phase, in der kein Reibschluß mit dem Antriebsstößel besteht, etwas zurückgestellt wird. Zur Vermeidung von Schlupf können mehrere piezoelektrische Antriebsstößel vorgesehen sein, so daß immer ein Reibschluß zwischen mindestens einem der Stößel und der Antriebswelle besteht. Dieses bedingt jedoch sehr hohe Kosten aufgrund der erforderlichen Anzahl von Piezoaktoren samt zugehöriger Ansteuerungselektronik.

Aus US 5,079,471 ist ein Motor mit einer Welle, welche von Antriebselementen über einen Antriebsring zum rotieren gebracht wird, bekannt. Der Hub aus den Antriebselementen wird über einen komplexen Aufbau von Lagern, Stützen und einer Muffe schließlich die Welle übertragen. Die Antriebselemente liegen mit deren Längsachsen tangential zur Oberfläche der Welle.

Aus DE 44 35 996 A1 sind Linearaktoren bekannt, welche auf ein Gehäuseteil wirken. Innerhalb des Gehäuseteils befindet sich ein mit dem Gehäuseteil fest verbundenes Ringelement, in dem wiederum ein Rotor aufgenommen ist. Der Rotor ist drehfest mit einer Welle verbunden.

WO 97/26702 offenbart Antriebselemente, welche über ein Gleitlager mit einem Stator verbunden sind. Das Gleitlager schränkt die Bewegung des Stators in der Ebene senkrecht zur Achse einer Welle ein.

Aus JP A 60156283 ist ein Motor bekannt, bei dem Antriebselemente mit der Innenseite eines Antriebsringes über eine elastische Einheit verbunden sind.

Es ist die Aufgabe der vorliegenden Erfindung, eine Möglichkeit für einen verschleißreduzierten, leisen, weitgehend schlupffreien und vereinfachten Motor bereitzustellen.

Diese Aufgabe wird durch einen elektromechanischen Motor gemäß Patentanspruch 1, durch ein Verfahren gemäß Patentanspruch 13 sowie durch eine Verwendung gemäß Patentanspruch 16 gelöst. Vorteilhafte Ausgestaltungen sind den Unteranspruchen entnehmbar.

Der elektromechanische Motor weist mindestens zwei oder mehr elektromechanische Antriebselemente, einen Antriebsring und eine antreibbare Welle auf. Der Antriebsring kann durch einen Hub der elektromechanischen Antriebselemente, d. h. durch Steuerung der Hubamplituden der einzelnen Antriebselemente und die zeitliche Abstimmung dieser Hubamplituden untereinander, zu einer umlaufenden Verschiebebewegung angeregt werden. Unter einer umlaufenden Verschiebebewegung des Antriebsrings wird verstanden, daß dieser auf einer gekrümmten Bahn verschoben wird, aber dabei nicht oder nur unwesentlich rotiert. Die gekrümmte Bahn kann z. B. kreisförmig oder elliptisch sein, ist aber nicht auf diese Bahnformen eingeschränkt. Der Antriebsring muß die gekrümmte Bahn nicht kontinuierlich durchlaufen, sondern kann auch beliebig gestoppt und in seiner Bewegungsrichtung umgekehrt werden.

Die Welle ist auf den Antriebsring aufsetzbar, so daß die Verschiebebewegung des Antriebsrings durch den Kontakt zwischen Welle und Antriebsring auf die Welle Übertragbar ist. Weil der Antriebsring auf einer gekrümmten Bahn läuft, wird die Welle bei bewegtem Antriebsring durch einen Reibkontakt rotierend mitgeführt. Die Umdrehungsgeschwindigkeit der Welle hängt dabei neben der Bewegungsgeschwindigkeit des Antriebsrings unter anderem auch von der Form der Welle und des Antriebsrings ab.

Ein elektromechanisches Antriebselement weist einen Aktor auf, bei dem sich ein Volumen durch Anlegen eines elektromagnetischen Signals verändern kann, z. B. einen piezoelektrisch, magnetostriktiv, elektrostriktiv oder elektrodynamisch angetriebenen Aktor.

In den folgenden Ausführungsbeispielen wird der elektromechanische Motor schematisch näher beschrieben.

Figur 1 zeigt als Schnittdarstellung in Aufsicht einen elektromechanischen Motor mit innenliegender Welle in Grundstellung,

Figur 2 zeigt den elektromechanischen Motor nach dem Zusammenbau vor Einfahren in die Grundstellung ,

die Figuren 3 bis 6 zeigen den elektromechanischen Motor in verschiedenen Stellungen,

Figur 7a zeigt eine Ansteuerung der elektromechanischen Aktoren,

Figur 7b zeigt das zu Figur 7a korrespondierende Amplitudendiagramm,

Figur 8 zeigt eine weitere Ausführungsform der elektromechanischen Motors,

Figur 9 zeigt eine weitere Ausführungsform der elektromechanischen Motors,

die Figuren 10 a bis c zeigen verschiedenenAnordnungen eines elektromechanischen Motors mit Hubübersetzer,

Figur 11 zeigt als Schnittdarstellung in Seitenansicht den elektromechanischen Motors,

Figur 12a zeigt als Schnittdarstellung in Aufsicht ein elektromechanisches Antriebssystem mit zwei elektromechanischen Motoren,

Figur 12b zeigt die zu Figur 12a korrespondierende Schnittdarstellung in Seitenansicht,

Figur 13a zeigt als Schnittdarstellung in Aufsicht ein weiteres elektromechanisches Antriebssystem mit zwei elektromechanischen Motoren,

Figur 13b zeigt die zu Figur 12a korrespondierende Schnittdarstellung in Seitenansicht,

Figur 14 zeigt eine Variante eines 3-Ring-Motors

Figur 15a zeigt als Schnittdarstellung in Seitenansicht einen elektromechanischen Motor mit außenliegender Welle,

Figur 15b zeigt die zu Figur 15a korrespondierende Schnittdarstellung in Aufsicht,

Figur 16a bis f zeigt als Schnittdarstellung in Seitenansicht mögliche Kontaktprofile zwischen Antriebsring und Welle.

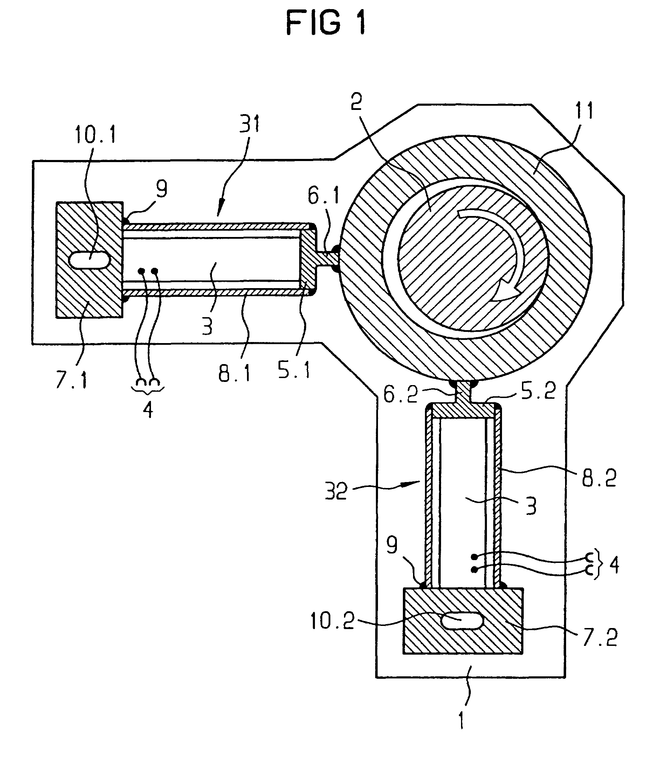

Figur 1 zeigt als Schnittdarstellung in Aufsicht einen elektromechanischen Motor A.

Dieser besteht aus mindestens einer mechanischen Grundplatte 1, in der die Welle 2 eines Motors mittels eines Lagers möglichst spielfrei drehbar geführt ist. Weiterhin sind ein erstes elektromechanisches Antriebselement 31 und ein zweites elektromechanisches Antriebselement 32, jeweils aufweisend einen piezoelektrischen Niedervoltmultilayeraktor 3 ("PMA"), vorhanden. Die PMAs 3 können jeweils von einem elektrischen Verstärker über elektrische Zuleitungen 4 angesteuert werden. Ein elektromechanisches Antriebselement 3 kann aber auch einen beliebigen anderen, sich gesteuert longitudinal ausdehnenden Aktor verwenden, wie z.B. einen elektromagnetischen, elektrodynamischen, elektrostriktiven oder magnetostriktiven Aktor. Durch elektrische Ansteuerung des PMA 3 dehnt sich dieser gemäß dem Verhalten eines piezoelektrischen Längsaktors näherungsweise proportional der angelegten elektrischen Spannung in axialer Richtung aus.

Jeder PMA 3 ist zwischen einer Kopfplatte 5, die einen Stößel 6 aufweist, einem Lagerblock 7 und einer mechanisch möglichst weichen (z. B. geschlitzten) Rohrfeder 8 unter hoher mechanischer Druckvorspannung verbaut. Die mechanische Druckvorspannung dient einerseits zur Vermeidung einer Schädigung des PMA 3 durch Zugspannungskräfte, die sonst im hochfrequenten Dauerbetrieb auftreten können, und andererseits zur Rückstellung des PMA 3, wenn dieser elektrisch entladen wird.

Da der Hub des PMA 3 durch die Rohrfeder 8 verringert wird, sollte diese in Bezug auf die Steifigkeit des Piezoaktors eine möglichst kleine Federkonstante aufweisen (z.B. Piezoaktor 7 x 7 x 30 mm hat $c_{Piezo} = 50$ N/µm, Federrate der Schlitzrohrfeder $c_{Feder} = 3$ N/µm ,d.h. der durch die Rohrfeder 8 bedingte Hubverlust beträgt (1-50/53) *100% = 5.7 %).

Die dauerhaft feste Verbindung von PMA 3, Kopfplatte 5, Lagerblock 7 und Rohrfeder 8 erfolgt über Schweißverbindungen 9. Der Lagerblock 7 kann mit der Grundplatte 1 über durch Langlöcher 10 geführte Schrauben fest verbunden werden. Diese Verbindung kann auch mit anderen Mitteln, z.B. durch Verschweißung des Lagerblocks 7 mit der mindestens einen Grundplatte 1 hergestellt werden.

Der elektromechanische Motor A weist einen möglichst steifen und massearmen konzentrischen Antriebsring 11 mit einem Innendurchmesser dR auf, der etwas größer ist als der Durchmesser dM der Welle 2. Der Antriebsring 11 ist mit den Stößeln 6 so verschweißt, das er zur Grundplatte 1 einen Abstand aufweist, er über der Grundplatte 1 somit frei beweglich ist. Die mit der Grundplatte 1 über die Lagerblöcke 7 fest verbundenen Antriebselemente 31,32 sind in der Ebene der Grundplatte 1, die hier der Bewegungsebene entspricht, in einem Winkel von 90 Grad zueinander angeordnet, wobei ihre Hauptwirkrichtung auf den Mittelpunkt des Antriebsringes 2 gerichtet ist.

Diese Ausführungsform vermeidet die Nachteile der bisher bekannten Piezoantriebe durch das Abrollen der drehbar gelagerten Welle 2 auf der Innenseite des von den Antriebselementen 31,32 periodisch kreisförmig verschobenen Antriebsringes 11, wobei die typischen Vorteile eines Piezomotors uneingeschränkt erhalten bleiben.

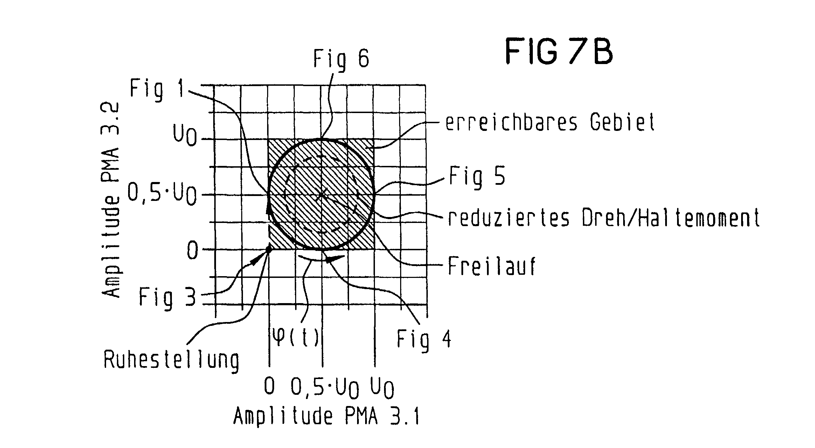

Zur Erzeugung der kreisförmigen Verschiebebewegung des Antriebsringes 11 werden die beiden Antriebselemente 31,32 mit zwei um 90 Grad phasenverschobenen sinusförmigen Spannungssignalen gleicher Spitzenamplitude angesteuert, ähnlich einer Lissajous-Figur (siehe auch Figur 7). Das Spaltmaß zwischen Welle 2 und Innenfläche des Antriebsringes 11 ist in Verbindung mit den Eigenschaften der PMAs 3 und einer Montage des Motors so ausgelegt, daß während jeder Phase der Abrollbewegung ein starker Reibschluß zwischen Welle 2 und Antriebsring 11 besteht, insbesondere auch bei ausgeschaltetem Motor (beide PMAs 3 entladen).

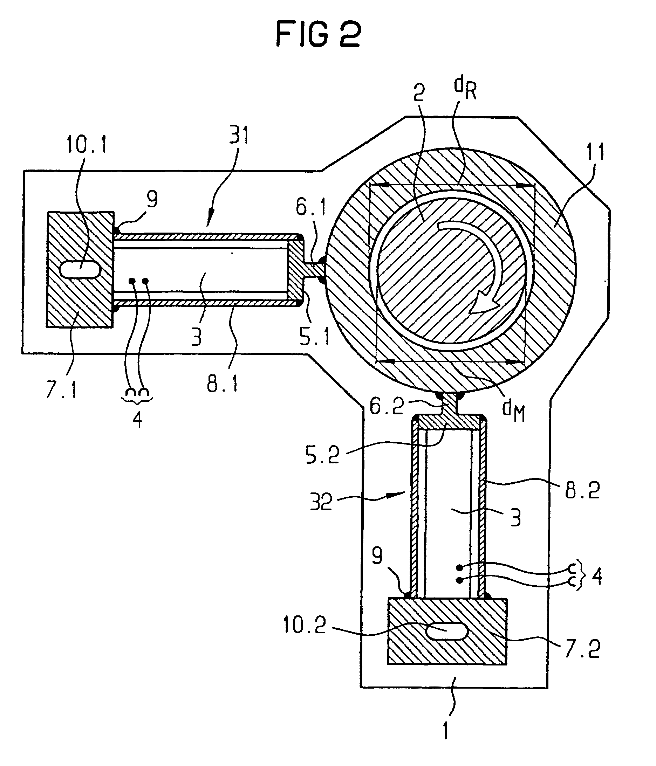

Figur 2 zeigt den elektromechanischen Motor A direkt nach einer Montage vor einer Feststellung der Ruheposition der Antriebselemente 31,32.

Zur Montage des elektromechanischen Motors A in Grundstellung:
Der Außendurchmesser der zylindrischen Welle 2 beträgt $d_M$, der Innendurchmesser des konzentrischen Antriebsringes 11 beträgt $d_R$. Es muß die Bedingung $d_R > d_M$ erfüllt sein, also ein geringes dem Hub der PMA angepaßtes Spaltmaß zwischen Welle 2 und Antriebsring 11 vorhanden sein. Als elektromechanisches Antriebselement 31,32 wird im folgenden jeweils die Einheit aus dem in der Rohrfeder 8 mit Lagerblock 7, Kopfplatte 5 und Rohrfeder 8 druckvorgespannt verschweißten PMA 3 bezeichnet. Die elektromechanischen Eigenschaften des Antriebselementes 31,32 sind unter anderem gekennzeichnet durch die Leerlaufauslenkung xA, durch die Blockierkraft FA und durch die Steifigkeit cA. Die mechanische Druckvorspannkraft des PMA 3 wird als FP bezeichnet. Als Beispiel wird ein PMA 3 der Abmessungen 7 x 7 x 30 mm betrachtet, der wie oben beschrieben in einer Rohrfeder 8 druckvorgespannt verschweißt ist. Typische Werte für das sich hieraus ergebende Antriebselement 31,32 sind:

xA = 40 µm
FA = 2120 N
cA = 53 N/µm
FP = 1000 N

Im Grundzustand des elektromechanischen Motors A (beide PMA 3 entladen) soll die Welle 2 blockiert sein. Außerdem sollen die PMAs 3 im Motorbetrieb möglichst nur unidirektional, d.h. mit positiven Spannungen entsprechend der Polungsrichtung der PMA 3, betrieben werden. Dieses läßt sich durch die folgende statische Montagesequenz erreichen:

Zunächst sind beide PMA 3 entladen und der Antriebsring 11 befindet sich gegenüber der Welle 2 in einer beliebigen Position. In dieser Figur ist für diesen Zustand der Sonderfall einer zentrischen Lage von Antriebsring 11 und Welle 2 dargestellt.

Der PMA 3 des ersten Antriebselementes 31 bleibt entladen während der PMA 3 des zweiten Antriebselementes 32 auf die halbe Nennbetriebsspannung $U_0$ aufgeladen wird. Das erste Antriebselement 31 ist folglich nicht elongiert, es befindet sich in seiner Grundstellung. Das zweite Antriebselement 32 ist um den halben Wert seiner Leerlaufauslenkung, d.h. um 20 µm elongiert. Hierbei spielt die Stellung von Welle 2 und Antriebsring 11 zunächst noch keine Rolle.

Durch eine am Lagerblock 7 des ersten Antriebselementes 31 in Längsachse des PMA 3 und durch den Mittelpunkt des Antriebsringes 11 angreifende, nach links gerichtete und von außen aufgebrachte Kraft, wird der Antriebsring 11 gegen die Welle 2 gezogen und an dem dem Stößel 6 gegenüberliegenden Punkt des Antriebsringes 11 ein Reibschluß zwischen Welle 2 und Antriebsring 11 hergestellt, wodurch sich die bereits in Fig.1 gezeigte Stellung ergibt.

Diese Kontaktkraft, typischerweise im Bereich von 500 N, kann sehr hoch sein, sollte aber nicht die Vorspannkraft des PMA 3 in der Rohrfeder 8 übersteigen.

Im vorliegenden Beispiel wird diese Anpreßkraft zu 500 N angenommen.

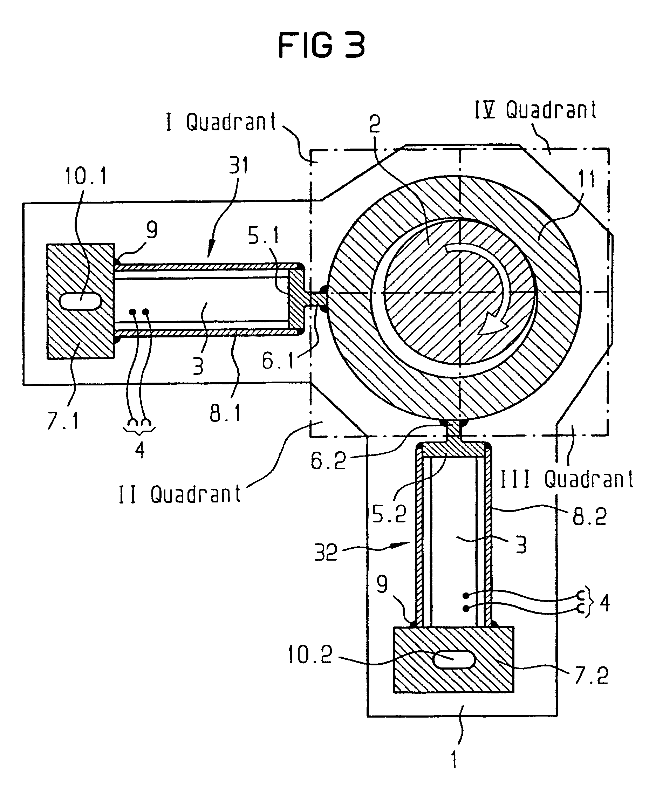

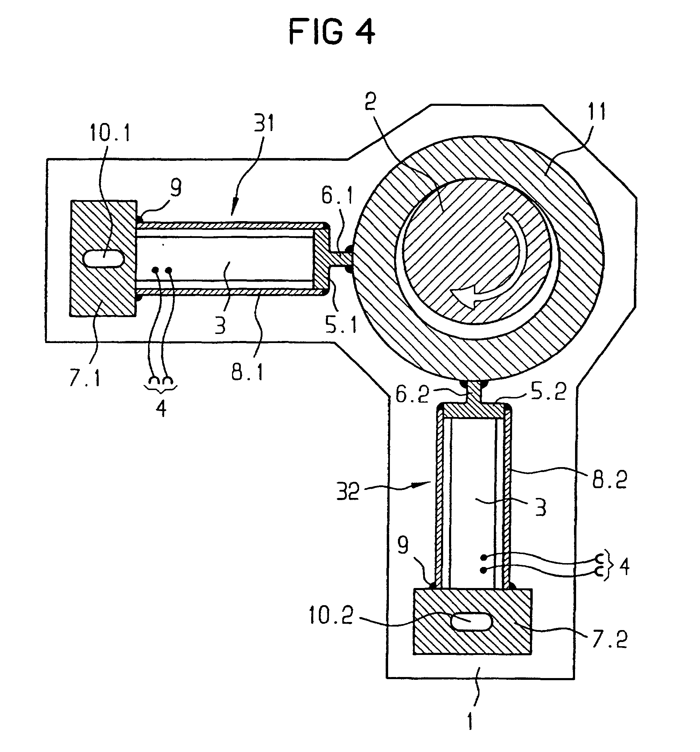

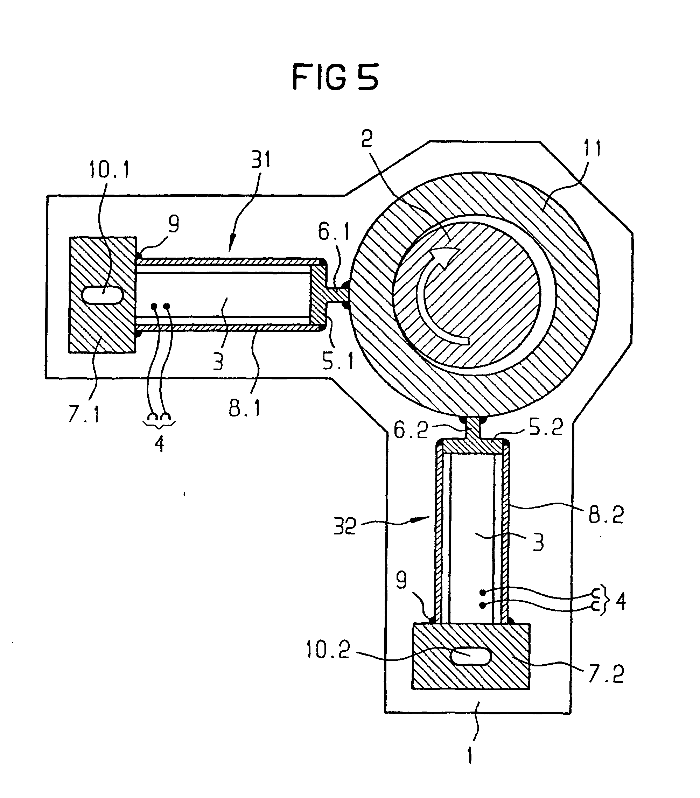

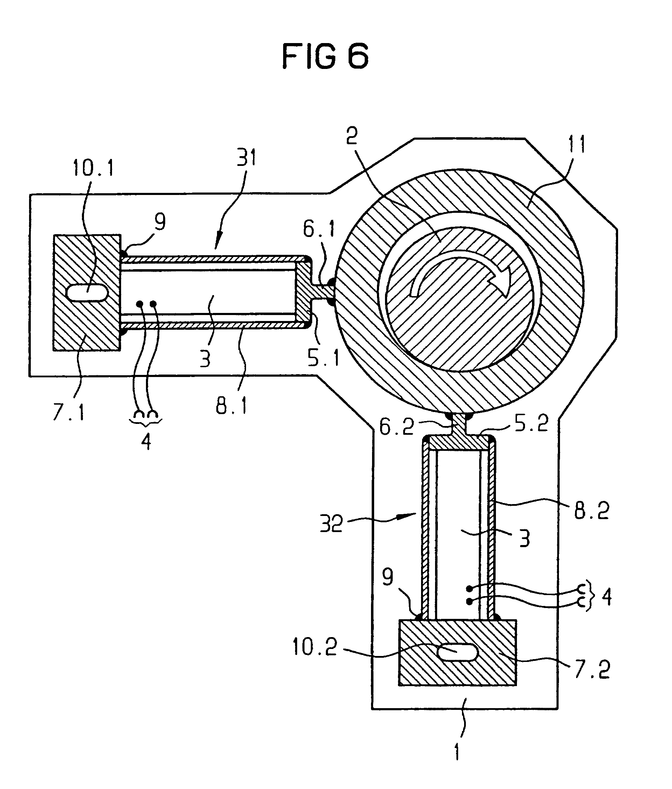

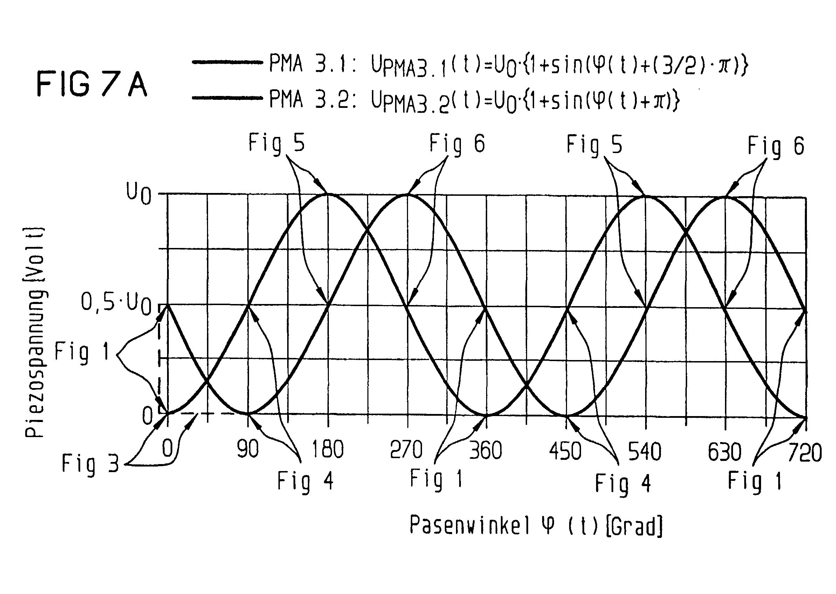

Figur 3 zeigt den elektromechanischen Motor A in einer Stellung, bei der sich der Kontakt zwischen Welle 2 und Antriebsring 11 im 4. Quadranten (Grundstellung) befindet. Die Lagerblöcke 7 sind fest mit der Grundplatte 1 verbunden (z.B. verschraubt, verschweißt).

Um den Motor A in die Grundstellung zu bringen, wird - ausgehend von Figur 2 - das zweite Antriebselement 32 mit dem halb geladenen PMA 3 vollständig entladen. Durch die damit verbundene Kontraktion des PMA 3 wandert der Kontaktpunkt zwischen Antriebsring 11 und Welle 2 in den IV. Quadranten, d.h. in eine vom zweiten Antriebselement 32 weiter entfernte und in eine in Bezug auf das erste Antriebselement 31 näher liegende Position, wodurch die Anpreßkraft weiter zunimmt. Diese Stellung des Motors A ist in dieser Figur dargestellt.

Durch den Reibschluß zwischen Antriebsring 11 und Welle 2 in Verbindung mit den mit der Grundplatte 1 fest verschweißten Lagerblöcken 7 ist die Welle 2 nun gegenüber Drehbewegungen blockiert.

Die oben beschriebene Montagesequenz ist nur eine von mehreren möglichen. Beispielsweise kann der Antriebsring 11 bei entladenen PMA (beide) auch durch eine von dem Mittelpunkt des Antriebsringes 11 weggerichtete, durch den II. Quadranten verlaufende Montagekraft im IV. Quadranten auf Anlage mit der Welle 2 gebracht werden, und diese Position z. B. durch Verschweißung oder Verschraubung der Lagerblöcke 7 mit der Grundplatte 1 fixiert werden.

Figur 4 zeigt einen elektromechanischen Motor A, bei dem der Antriebsring 11 auf der Grenze zwischen I. Quadranten und IV. Quadranten aufliegt.

Figur 5 zeigt einen elektromechanischen Motor A, bei dem der Antriebsring 11 auf der Grenze zwischen I. Quadranten und II. Quadranten aufliegt.

Figur 6 zeigt einen elektromechanischen Motor A, bei dem der Antriebsring 11 auf der Grenze zwischen II. Quadranten und III. Quadranten aufliegt.

Figur 7a zeigt eine Auftragung einer Piezospannung in Volt der PMAs der Antriebselemente 31,32 des Motors A aus den Figuren 1 bis 6 gegen einen Phasenwinkel $\varphi(t)$ in Grad.

Figur 7b zeigt zu Figur 7a das korrespondierende Amplitudendiagramm als Auftragung der an die PMAs 3 angelegten Steuerspannung.

Inbetriebnahme des elektromechanischen Motors A (eine mögliche Sequenz):

Ausgehend von der in Figur 3 gezeigten Ruhestellung kann die Welle 2 durch Anlegen unipolarer periodischer um 90 Grad phasenverschobener sinusförmiger Spannungen an die beiden PMA 3 in Drehung versetzt werden; Fig. 7 zeigt das zugehörige Phasendiagramm.

Dabei spielt es grundsätzlich keine Rolle, bei welcher absoluten Phasenlage der beiden Ansteuersignale der PMA 3 der Motor A in Betrieb genommen wird, solange die relative Phasenverschiebung zwischen den beiden sinusförmigen Ansteuersignalen 90 Grad beträgt (andernfalls könnte kurzzeitig der Reibschluß zwischen Welle 2 und Antriebsring 11 verloren gehen, was, solange dieser Betriebszustand schnell durchlaufen wird, auch keine nachteiligen Konsequenzen hat).

Beispielsweise kann, wie in Fig.7 symbolisch angedeutet, zunächst an den PMA 3 des zweiten Antriebselementes 32 die halbe Nennbetriebsspannung angelegt werden, womit sich der Motor zunächst in die schon in Fig.1 gezeigt Stellung begibt.

Ausgehend von der in Fig.1 gezeigten Stellung wird nun mit der periodischen Ansteuerung der beiden PMA 3 begonnen, wobei die elektrischen Signalspannungen an den PMA 3 z.B der Bedingung:

$$U_{PMA3.1}(t) = U_0 \cdot \{1+\sin(\varphi(t)+ (3/2) \cdot \pi\} \qquad [\text{Volt}]$$

$$U_{PMA3.2}(t) = U_0 \cdot \{1+\sin(\varphi(t) + \pi)\} \qquad [\text{Volt}]$$

gehorchen. Die Phasenlage der zugehörigen Ansteuerspannungen kann Fig.7 a.) entnommen werden. Wie das Phasenportrait in Fig.7 b.) zeigt, resultiert hieraus eine periodische kreisförmige Verschiebung des Antriebsringes 11, die durch den dauerhaften Reibschluß mit der Welle 2 in eine Drehbewegung der Welle 2 umgesetzt wird. Dabei werden vom Motor A sequentiell und periodisch die Phasen gemäß Fig.1 → Fig.4 → Fig.5 → Fig.6 → Fig.1 ... durchlaufen.

Aus den folgenden Gründen ist die Verschiebebewegung des Antriebsringes 11 nicht exakt kreisförmig: Hysterese der PMAs 3, Anlenkung des Antriebsringes 11 an zwei PMAs 3, Deformation des Antriebsringes 11 durch mechanische Kräfte. Diese Verzerrung kann jedoch durch eine Entzerrung der Ansteuersignale, die dann nicht mehr genau sinusförmig sind, kompensiert werden. Insbesondere kann das komplette in Fig.7. b.) schraffiert gezeichnete Gebiet elektrisch angesteuert werden. Dadurch können alle für einen Motor A relevanten Betriebszustände elektrisch angesteuert werden, z.B. reduziertes Halte/Drehmoment, erhöhtes Haltemoment oder Freilauf der Motorachse. Ebenso kann die Drehrichtung durch Phasenschiebung der beiden Ansteuersignalspannungen für die PMAs3 kommutiert werden (Verschiebung der Ansteuersignale zueinander um $\pm\pi$).

Vorteile des neuen elektromechanischen Motors A:

Minimaler mechanischer Verschleiß durch Abrollen der Welle 2 auf der Innenfläche des Antriebsrings 11.

Konstantes hohes frequenzunabhängiges Drehmoment.

Geringe Geräuschentwicklung durch Abrollen der Welle 2 auf dem Antriebsring 11.

Kein Schlupf durch ständigen Reibschluß zwischen Welle 2 und Antriebsring 11.

Zum Betrieb des elektromechanischen Motors A ist eine minimale Zahl von zwei PMA 3 ausreichend.

Die Welle 2 ist in Grundstellung blockiert (der elektromechanische Motor A kann aber auch so montiert werden, daß in Grundstellung ein Freilauf vorhanden ist, siehe Fig.2).

Durch Anfahren von Betriebspunkten innerhalb des in Fig.7b links unten gezeigten kreisförmigen Phasendiagramms können beliebige Betriebszustände gefahren werden, so kann z.B.:

- die Welle 2 in jeder beliebigen Winkelstellung mit hoher Kraft (blockiert) (an)gehalten werden
- das Haltemoment und das Antriebsdrehmoment des Motors A gezielt gesteuert werden
- die Welle 2 jederzeit auf Freilauf geschaltet werden (näherungsweise werden dabei beide PMA 3 halb ausgesteuert gehalten)

Der elektromechanische Motor A kann statisch, bzw. mit niedriger Ansteuerfrequenz, betrieben werden.
Der elektromechanische Motor A kann hochfrequent betrieben werden.
Der elektromechanische Motor A kann sowohl elektrisch als auch mechanisch resonant betrieben werden. Werden elektrische und mechanische Resonanz aufeinander abgestimmt ergeben sich sehr hohe Leistungswerte und ein hoher Wirkungsgrad.
Bei vorgegebener Geometrie des elektromechanischen Motors A ist die Drehgeschwindigkeit durch die Ansteuerfrequenz der PMAs 3 elektrisch steuerbar.
Bei vorgegebener Geometrie des elektromechanischen Motors A ist das Drehmoment durch die Höhe der Ansteuerspannungen elektrisch steuerbar.
Die Drehrichtung kann durch Kommutierung der Phasenlage der beiden sinusförmigen Ansteuerspannungen der PMA 3 kommutiert werden.
Zwischen den oben angegebenen Betriebsmodi kann im Betrieb beliebig gewechselt werden.
Der elektromechanische Motor A ist in seinen Leistungswerten (Drehmoment + Solldrehzahl) in weiten Grenzen skalierbar.

Das Untersetzungsverhältnis des elektromechanischen Motors A ergibt sich aus der Umfangsdifferenz von Außenumfang $L_M$ der Welle 2 zu Innenumfang $L_R$ des Antriebsringes 11. Hierzu eine Beispielrechnung:
Ein in einer Rohrfeder 8 der Federrate cR = 3 N/µm gehauster PMA 3 der Baulänge 30 mm besitzt typischerweise eine Leerlaufauslenkung von xA = 40 µm bei einer Blockierkraft von FB = 2120 N. Soll der Antriebsring 11 in jeder Stellung mit einer Kraft von 500 N an die Welle 2 angepreßt werden können, ergibt sich ein nutzbares maximales Spaltmaß von ca.
s = 31 µm. Beträgt der Durchmesser der Welle 2 $d_M$ = 10 mm (Umfang $L_M = \pi \cdot d_M$), so folgt hieraus für den Innendurchmesser des Antriebsringes 11 $d_R$ = 10.031 mm ($d_R = d_M + s$) und für die Umfangsdifferenz $\Delta L = \pi \cdot (d_R - d_M) \rightarrow \Delta L = \pi \cdot s \rightarrow \Delta L = 97$ µm. Hieraus ergibt sich die Winkeldrehung $\Delta\Phi$ der Welle 2 pro abgeschlossener Periode der kreisförmigen Verschiebebewegung des Antriebs ringes 11 zu

$$\Delta\Phi = 360° \cdot (\Delta L / L_M)$$
$$\rightarrow \Delta\Phi = 360° \cdot (s/d_M) \quad \text{pro Periode} \quad \text{(Gl.1)}$$
$$\rightarrow \Delta\Phi = 1.1° \text{ pro Periode.}$$

Wie Gleichnung 1 zeigt, ist der Winkelvorschub pro Periode einer vollständigen Verschiebebewegung des Antriebsringes 11 eine direkte Funktion des Verhältnisses von Spaltmaß zum Durchmesser der Welle 2. Auf beide Größen kann einfach Einfluß genommen werden, wobei das Drehmoment des elektromechanischen Motors A natürlich in umgekehrter Weise wie die Motordrehzahl vom Durchmesser der Welle 2 abhängt. Wird der Motor A mit einer Frequenz von 327 Hz betrieben, beträgt die Drehzahl der Welle 2, um beim obigen Beispiel zu bleiben, 1 Umdrehung/sec. Das hierbei vom Motor 2 erzeugte Drehmoment kann aufgrund der Einflüsse der Steifigkeiten von Grundplatte 1, Verschweißung 9 und derjenigen des Antriebsringes 11 nur abgeschätzt werden. Es liegt im Bereich einiger Newtonmeter. Bei fester Ansteuerfrequenz und Ansteueramplitude der PMA 3 kann das Drehmoment durch einen größeren Durchmesser von Welle 2 und Antriebsring 11, bei dann entsprechend geringerer Drehzahl, jedoch sehr stark erhöht werden. Aufgrund der Tatsache, daß ein solcher elektromechanischer Motor A bei Frequenzen von etlichen Kilohertz betrieben werden kann, ergeben sich hervorragende elektromechanische Leistungsmerkmale.

Sowohl Welle 2 als auch Antriebsring 11 sind als Drehteile mit hoher Präzision kostengünstig herstellbar.
Der elektromechanische Motor A ist prädestiniert für den Einsatz der kostengünstigen Niedervolt-Hochleistungsmultilayeraktoren.
Platzsparender und massearmer Aufbau mit Hochlauf/Stop-Zeiten im Millisekundenbereich.

Rückwirkungen auf die Welle 2 können durch elektronische Auswertung der Piezospannungsverläufe detektiert werden und so ohne zusätzlichen sensorischen Aufwand z.B. ein Klemmschutz realisiert werden.

Ausführungsvarianten/Verbesserungen:

Aus dem neuen Motorprinzip lassen sich eine Vielzahl weiterer Bauformen mit z. Teil erheblichen Verbesserungen ableiten, z.B.:

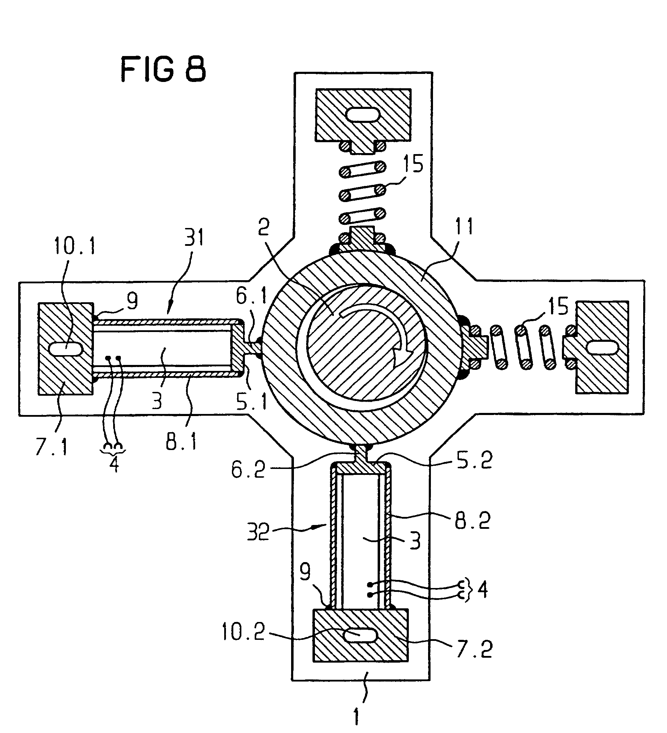

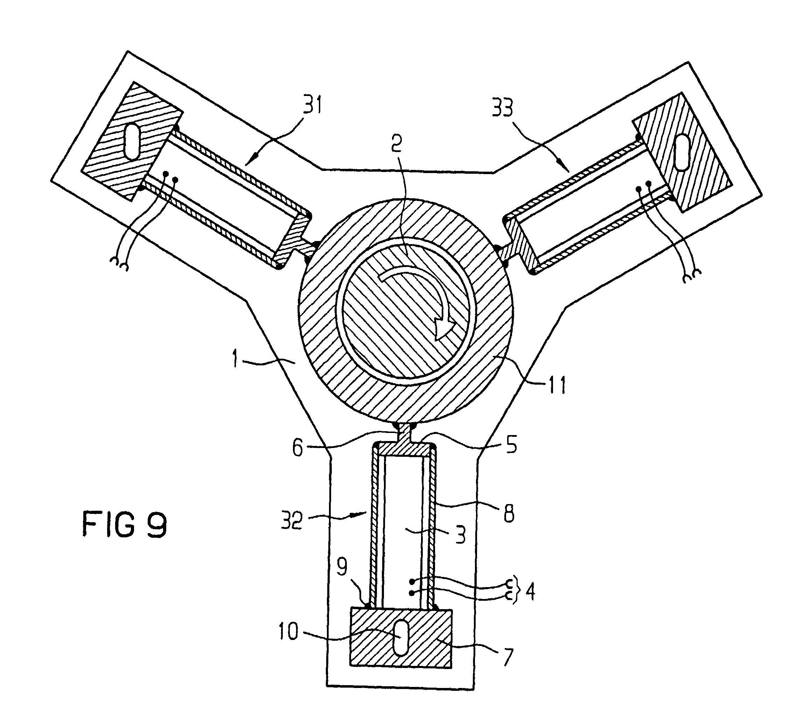

1. Symmetrisierung der Krafteinleitung in den Antriebsring 11 durch Anbringung von Rückstellfedern 15 am Außenumfang (Fig. 8) oder durch Anordnung weiterer PMAs 3 am Außenumfang des Antriebsringes (Fig. 9):

Durch die auf den Antriebsring 11 wirkenden Kräfte wird dieser elastisch deformiert und weicht somit von der idealen Kreisform ab. Dieser Einfluß kann korrigiert bzw. minimiert werden durch:

- einen sehr steifen mechanischen Aufbau des Antriebsringes 11,
- eine möglichst symmetrische Krafteinleitung der Antriebselemente 31,32,33 in den Antriebsring 11. Hierfür gibt zunächst Fig.8 ein Beispiel, wo auf der den PMA 3 abgewandten Seite des Antriebsringes 11 jeweils eine starke mechanische Rückstellfeder 15 angeordnet ist, womit sich eine über den Umfang des Antriebsringes 11 gleichmäßige Krafteinleitung und eine damit geringere und symmetrischere Verformung des Antriebsringes 11 ergibt (außerdem wird hierdurch die Zugbelastung der Schweißnähte der Stößel verringert). Gleiches läßt sich auch durch die Anbringung von mehr als zwei Piezoaktoren 3 auf der Außenfläche des Antriebsringes 11 erreichen, wie in Fig.9 für drei Piezoaktoren dargestellt;
- eine Anpassung (Entzerrung) der Ansteuersignalform. Dabei werden die PMA 3 elektrisch so angesteuert, daß sich unter Berücksichtigung der elastischen Deformation des Antriebsringes 11 eine konstante Andruckkraft zwischen Antriebsring 11 und Welle 2 und ein gleichmäßiger Rundlauf einstellt. Da immer die Möglichkeit besteht die PMA 3 nicht nur in Bezug auf die Phase sondern auch bezüglich der Ansteueramplitude individuell unterschiedlich anzusteuern, müssen die einzelnen PMA 3 nicht notwendigerweise die exakt gleiche Bauform bzw. spezifische Auslenkung aufweisen. Beispielsweise kann die kreisförmige Verschiebung des Antriebsringes 11 auch durch einen kurzen Piezo, der mit hoher Ansteuerspannung betrieben wird, in Kombination mit einem rechtwinkelig dazu angeordneten langen Piezo, der mit niedrigerer Ansteuerspannung betrieben wird, erreicht werden.

2. Erhöhung der Verschiebebewegung des Antriebsringes 11 mittels mechanischer oder hydraulischer Hubvergrößerer (Hebel, Kolbenhydraulik, piezoelektrische Biegewandler).

Eine Erhöhung der Rotationsgeschwindigkeit der Welle 2 kann gemäß **Gl.1** durch Verkleinerung des Durchmessers $\mathbf{d_M}$ der Welle 2 und/oder durch Vergrößerung des Spaltmaßes **s** erreicht werden. Das Spaltmaß **s** ist durch den i.a. kleinen Hub der PMAs 3 von 10...100 µm begrenzt, da der Antriebsring 11 immer mit einer bestimmten Kraft auf Anlage mit der Welle 2 gehalten werden soll.

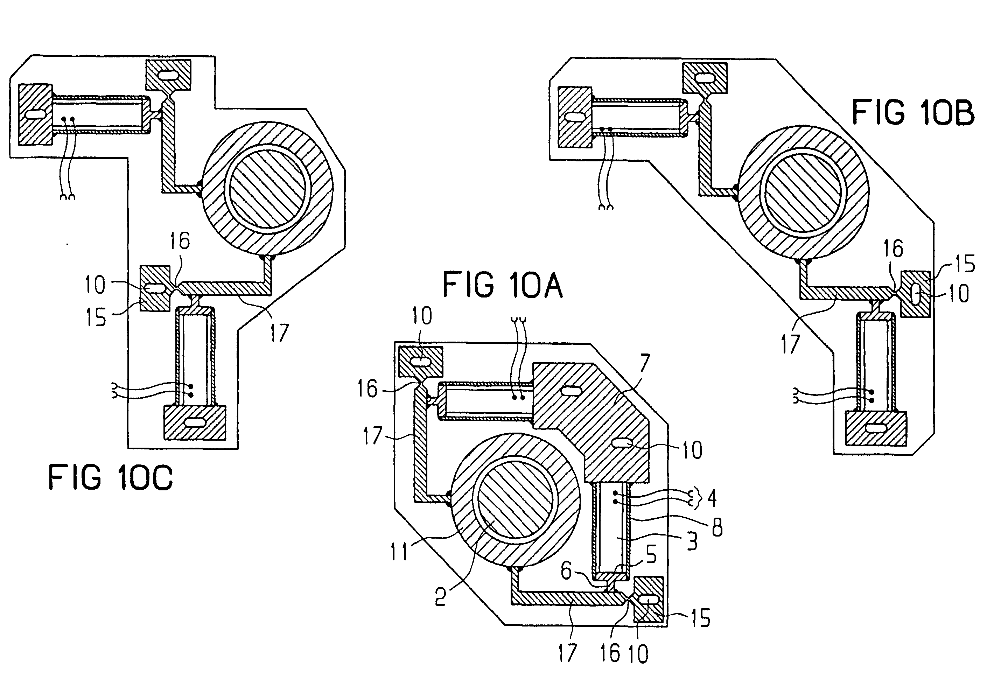

Mit Hilfe von Stellwegvergrößerern wie mechanischer Hebel oder hydraulischer Hubübersetzer kann der geringe Piezohub jedoch erheblich vergrößert werden. Ein mechanischer Hebelübersetzer, bestehend z.B. aus Hebellager 15, Hebelgelenk 16 und Hebelarm 17 läßt sich, wie Fig.10 zeigt, auf einfache Weise in die Konstruktion des Motors A integrieren, womit sehr kompakte bedarfsangepaßte Bauformen möglich sind (siehe verschiedene Ausführungen in Fig.10). Durch die hubübersetzte Verschiebebewegung des Antriebsringes 11 können durch eine entsprechend vergrößertes Spaltmaß bei gleichem Durchmesser der Welle 2 nun erheblich höhere Drehzahlen realisiert werden.

3. Eine wesentliche Vorraussetzung für die Funktion des beschriebenen Motors A ist eine hinreichend hohe mechanische Steifigkeit des gesamten Aufbaus und eine möglichst spielfrei gelagerte Welle 2. Zudem wirkt bei den in den vorangegangenen Figuren beschriebenen Aufbauten mit nur einer Grundplatte 1 aufgrund der notwendigen Anpreßkraft zwischen Antriebsring 11 und Welle 2 ein starkes Kippmoment auf die Motorachse. Hierfür gibt es folgende Verbesserungen:

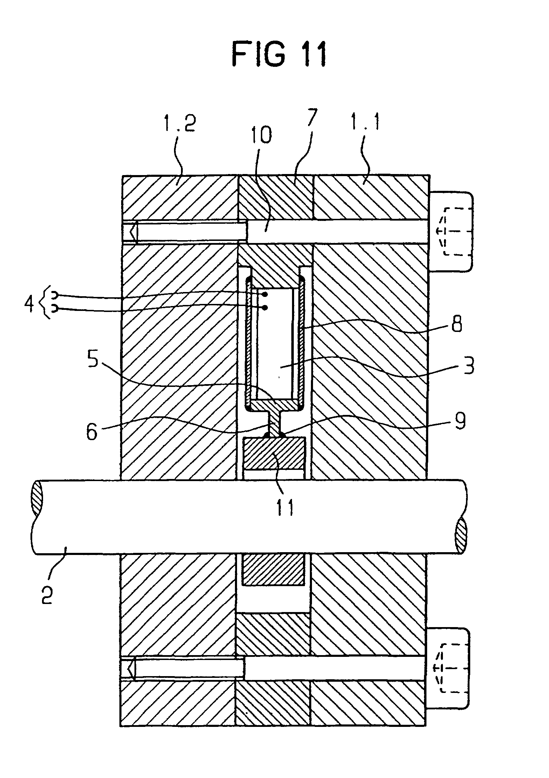

- Anbringung des Antriebselementes 31,32,33, bestehend aus Lagerblock, PMA, Stößel, gegebenenfalls Hubvergrößerer und Antriebsring zwischen mindesten zwei Grundplatten 1, in denen die Welle 2 spielfrei gelagert bzw. hindurchgeführt ist. Ein solcher Aufbau ist in Fig.11 dargestellt. Neben der höheren mechanischen Steifigkeit der in Fig.11 abgebildeten Anordnung, liegt ein weiterer Vorteil darin, daß die vom Antriebsring 11 auf die Welle 2 wirkende Kraft zu keinem Kippmoment auf die Welle 2 führt.

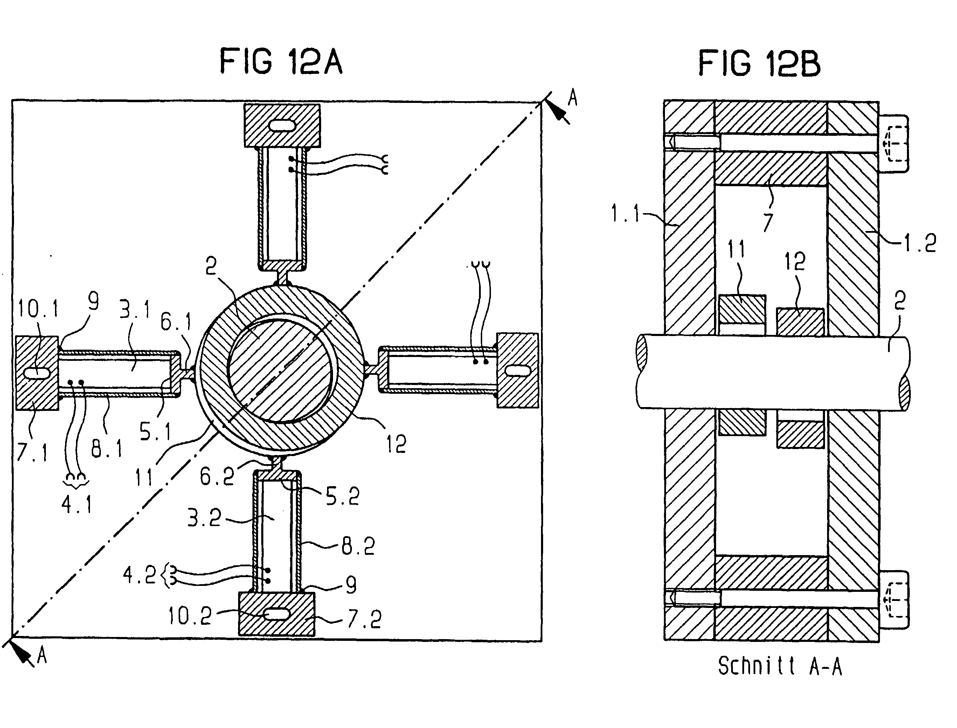

- Antrieb der Welle 2 mittels mehrerer phasenstarr gekoppelter Antriebsringe:
  Hierdurch kann das Lager der Welle 2 völlig kräftefrei gehalten und der nachteilige Einfluß des Lagerspiels gänzlich vermieden werden. Während selbst bei der in Fig.11 gezeigten Anordnung beide Lager immer noch Querkräfte aufnehmen müssen, weshalb eine weitestmögliche Spielfreiheit der Lager für die Funktion wichtig ist, ermöglicht die in Fig.12 dargestellte Anordnung mit zwei gleichsinnig angetriebenen und nahe beieinander angeordneten Antriebsringen 11, 12, die von den Antriebsringen über die Welle 2 auf die beiden Lager wirkenden Querkräfte stark zu minimieren. Dazu sind die beiden Antriebsringe 11, 12 so montiert, daß sich die zwei Kontaktpunkte auf der Welle 2 gegenüberliegen. Zum Betrieb des Motors A werden beide Antriebsringe 11, 12 durch die PMA 3 gleichsinning (also nicht gegenläufig) so verschoben, daß die beiden Kontaktpunkte sich auch im Betrieb immer gegenüberliegen. Hierzu kann jeweils ein PMA 3 des ersten Ringes mit einem PMA 3 des zweiten Ringes verbunden werden, so daß der Motor A sich elektrisch nicht von einem Einring-Motor unterscheidet.

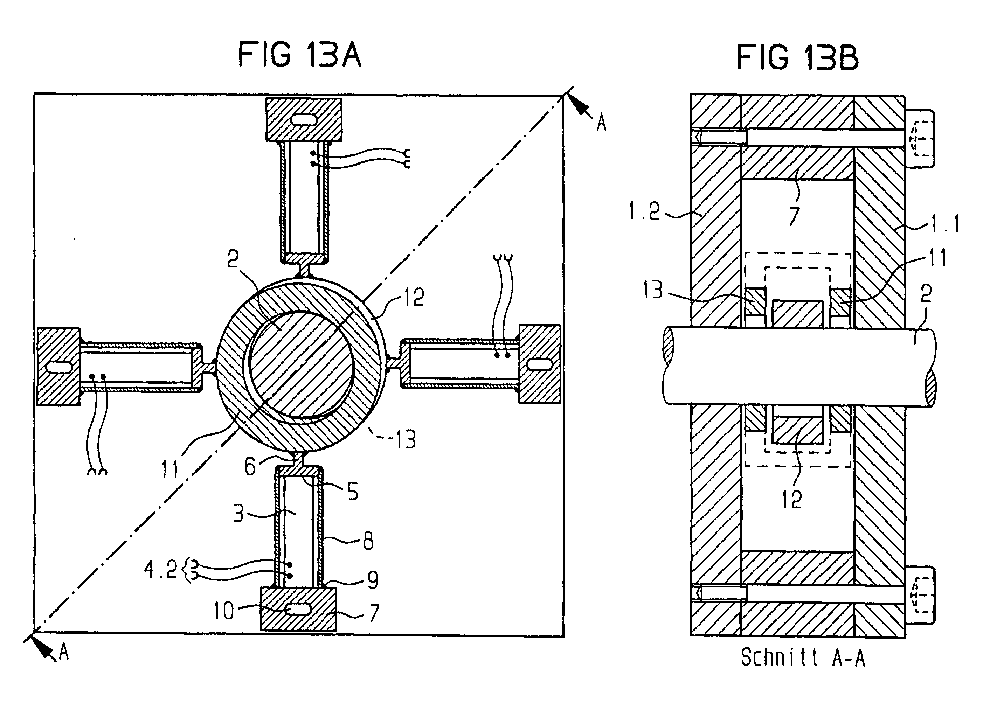

Eine von der Wirkung her besonders ausgezeichnete Bauform zeigt Fig.13. Dieser elektromechanische Motor A weist drei Antriebsringe 11, 12, 13, einen oberen 11, einen mittleren 12 und einen unteren 13 auf. Im einfachsten Fall sind der obere 11 und der untere 13 Antriebsring mechanisch miteinander starr verbunden (zwangsgekoppelt und im folgenden als gemeinsamer Ring bezeichnet) und wiederum so montiert, daß der Kontaktpunkt des mittleren Ringes 12 den Kontaktpunkten des unteren 13 und des oberen 11 Ringes auf der Welle jeweils gegenüberliegt. Da der gemeinsame Antriebsring von zwei PMA 3 angetrieben wird und der mittlere Ring seinerseits von zwei PMA 3 angetrieben wird, können auch hier jeweils ein PMA 3 des gemeinsamen Antriebsringes mit einem PMA 3 des mittleren Ringes elektrisch verschaltet werden (parallel oder in Serie). Der Motor A entspricht in seiner Funktion damit dem in Fig. 12 vorgestellten, mit dem weiteren Vorteil, daß die Welle 2 durch die Anordnung der Antriebsringe nun völlig momentenfrei und völlig kräftefrei ist (Biegemomente und Querkräfte), so dass nach außen hin lediglich das Antriebsmoment wirkt.
Damit besteht die Möglichkeit, auf ein Lager für die Welle völlig zu verzichten. In diesem Fall muß die Welle 2 lediglich durch ein herauswandern aus dem Motor A gesichert werden. Die bei der Montage eingestellte und im Betrieb wirkenden Andruckkräfte der Antriebsringe auf die Motorachse sind hierzu gleich groß gewählt. Beispielsweise ist die Kontaktfläche jedes äußeren Ringes 11, 13 nur halb so groß wie diejenige des mittleren Ringes 12. Bei der Montage wird man die Anpreßkraft jedes äußeren Ringes 11, 13 deshalb beispielsweise auf 250 N einstellen und diejenige des mittleren 12 Ringes auf 500 N, um die Momenten- und Kräftefreiheit der Motorachse zu erreichen. Anstelle der mechanischen Verbindung von oberem 11 und unterem Ring 13 können diese natürlich auch eigene Antriebselemente aufweisen die dann miteinander auf elektronischem Wege geeignet phasenstarr gekoppelt sind.

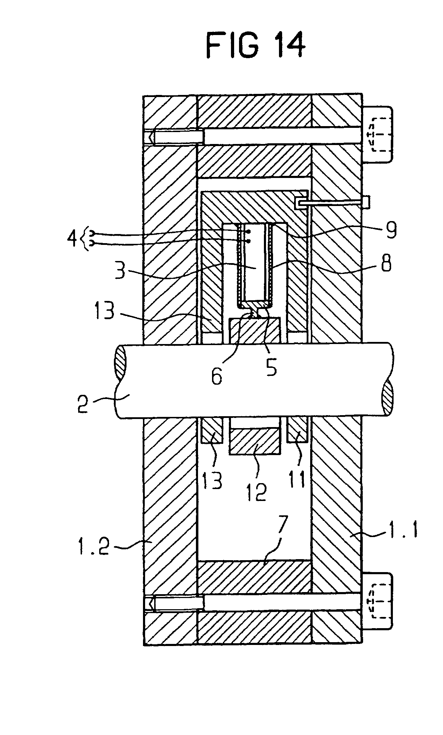

Fig.14 zeigt eine weitere Variante des 3-Ring-Motors aus Fig.13, die insgesamt nur zwei PMA 3 benötigt. Hierbei sind die PMA 3 so zwischen den beiden Antriebsringen (gemeinsamer 11, 13 und mittlerer 12) angeordnet, daß die Antriebsringe bei Ansteuerung der PMA gegeneinander verschoben werden, wobei die Welle 2 an gegenüberliegenden Punkten geklemmt wird. Bei Ansteuerung der beiden PMA 3 mit sinusförmigen Spannungssignalen und Aufrechterhaltung einer konstanten $\pm$ 90° Phasenbeziehung (Drehrichtung) rollt die Welle 2 an sich jeweils gegenüberliegenden Punkten auf den Antriebsringen ab, wodurch die Welle 2 in Rotation versetzt wird. Das hierbei auf die Antriebsringe wirkende Drehmoment wird durch einen Querstift, welcher nur kleine Bewegungen der Antriebsringe zuläßt auf das Gehäuse übertragen und so eine Verdrehung der Motorachse verhindert.

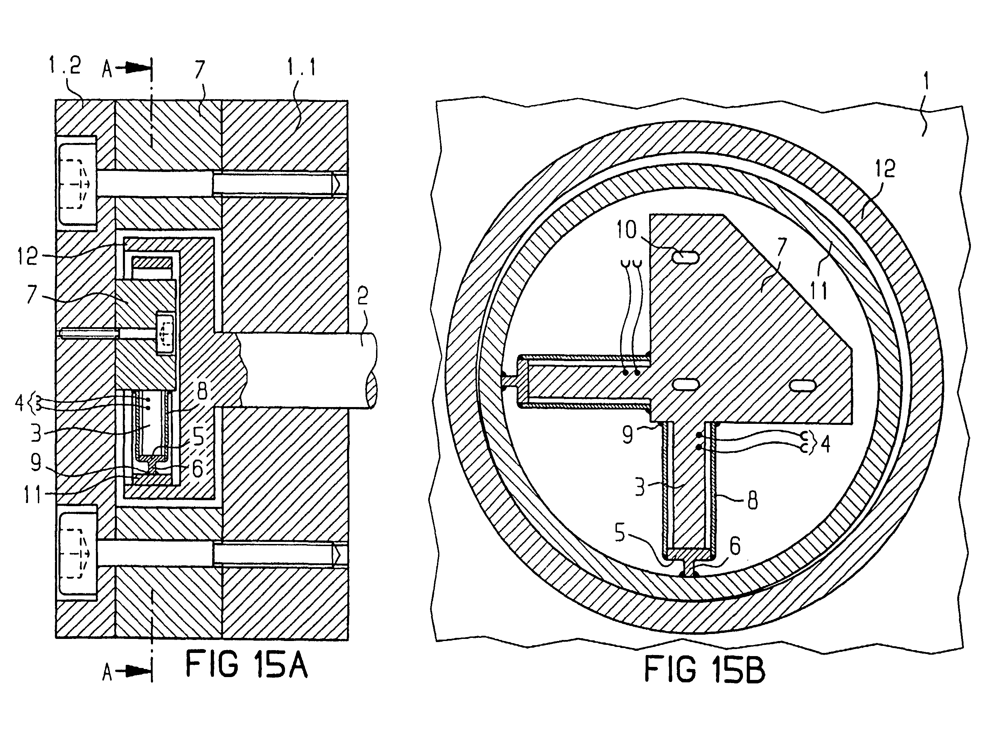

4. Das Antriebsprinzip kann auch so ausgeführt werden, daß die Außenfläche des Antriebsringes 11 die Welle 2 antreibt, siehe Fig.15. Hierbei treiben mindestens zwei PMA 3 die, wie Fig.15 zeigt, auch innerhalb des Antriebsringes 11 liegen können und sich mit ihren Lagern 7 an den Grundplatten 1 abstützen den Antriebsring an, der auf eine Antriebsglocke 12 wirkt, die mit der Motorachse 2 verbunden ist.

5. Zur Erhöhung des Reibwertes bzw. zur Verbesserung des Kraftschlusses zwischen Welle und Antriebsring, können die entsprechenden Oberflächen:

- eine definierte Oberflächenrauhigkeit aufweisen
- eine Mikroverzahnung aufweisen, wobei der Zahnabstand einem ganzzahligen Vielfachen der Umfangsdifferenz entspricht
- aus geeigneten Werkstoffpaarungen bestehen.

6. Bei Beachtung der entsprechenden Betriebsgrenzen können die PMA 3 nicht nur unipolar sondern auch bipolar angesteuert werden.

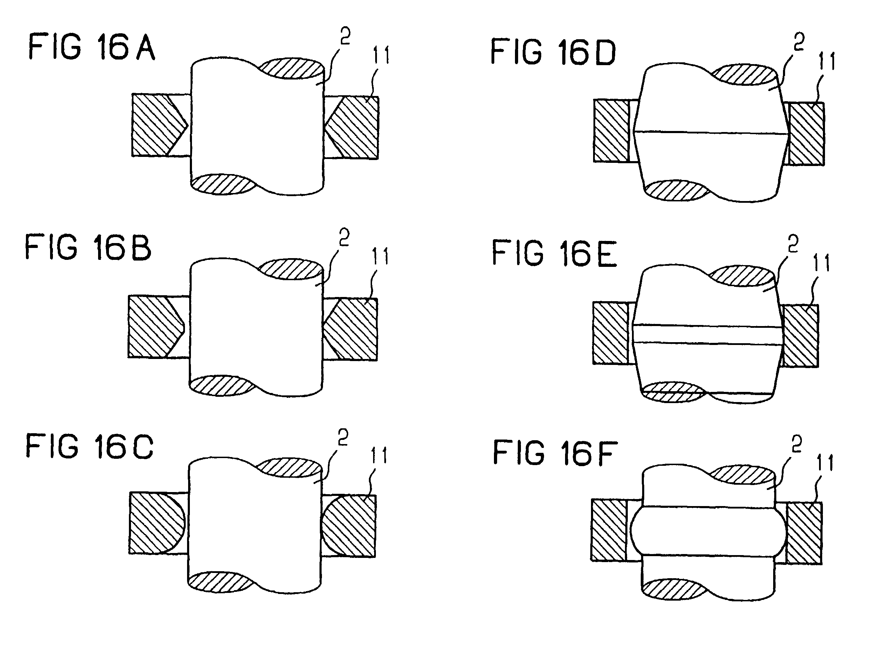

7. Um den Einfluß einer Verkippung der Antriebsringe bezüglich der Motorachse zu minimieren, können die entsprechenden Kontaktflächen zwischen Antriebsring 11 und Motorachse 2 anstelle einer zylindrischen Geometrie auch geeignete andere Formen aufweisen, z.B. konisch zulaufend oder ballig, wie in Fig.16 angedeutet.

## Patentansprüche

**1.** Elektromechanischer Motor (A), aufweisend,

- mindestens zwei elektromechanische Antriebselemente (31, 32, 33),
- mindestens einen Antriebsring (11), der durch einen Hub der elektromechanischen Antriebselemente (31, 32, 33) zu einer umlaufenden Verschiebebewegung anregbar ist,
- eine Welle (2), die an den Antriebsring (11) aufsetzbar ist, so dass durch die Verschiebebewegung des Antriebsrings (11) die Welle (2) rotierbar ist, **dadurch gekennzeichnet, dass**

der mindestens eine Antriebsring (11) mit den Antriebselementen (31, 32, 33) verschweißt ist.

**2.** Elektromechanischer Motor (A) nach Anspruch 1, bei dem die mindestens zwei elektromechanischen Antriebselemente (31,32,33) durch Piezoaktoren (3) antreibbar sind.

**3.** Elektromechanischer Motor (A) nach einem der Ansprüche 1 oder 2, bei dem

- der Antriebsring (11) kreisförmig ist, und
- die mindestens zwei elektromechanische Antriebselemente (31,32,33) so am Antriebsring (11) angebracht sind, daß ihr jeweiliger Hub radial auf den Antriebsring (11) wirkt.

**4.** Elektromechanischer Motor (A) nach einem der Ansprüche 1 bis 3, bei dem zwei elektromechanische Antriebselemente (31,32) innerhalb einer Bewegungsebene des Antriebsrings (11) um einen Winkel ($\alpha$) von annähernd 90° zueinander versetzt sind.

**5.** Elektromechanischer Motor (A) nach einem der Ansprüche 1 bis 3, bei dem mehr als zwei elektromechanische Antriebselemente (31,32,33) innerhalb einer Bewegungsebene des Antriebsrings (11) um einen annähernd konstanten Winkel ($\alpha$) zueinander versetzt sind.

**6.** Elektromechanischer Motor (A) nach einem der Ansprüche 1 bis 5, bei dem sich die Welle (2) innerhalb des Antriebsrings (11) befindet.

**7.** Elektromechanischer Motor (A) nach einem der Ansprüche 1 bis 5, bei dem sich die Welle (2) außerhalb des Antriebsrings (11) befindet.

**8.** Elektromechanischer Motor (A) nach einem der vorhergehenden Ansprüche, bei dem zwischen mindestens einem der mindestens zwei elektromechanischen Antriebselemente (31,32,33) und dem Antriebsring (11) ein Hubübersetzer, insbesondere ein Hebelübersetzer, vorhanden ist.

**9.** Elektromechanischer Motor (A) nach einem der vorhergehenden Ansprüche, bei dem gegenüber mindestens einem der mindestens zwei elektromechanischen Antriebselemente (31,32,33) ein Federelement (15) am Antriebsring (11) befestigt ist.

**10.** Elektromechanischer Motor (A) nach einem der vorhergehenden Ansprüche, bei dem zwischen Antriebsring (11) und Welle (2) ein dauernder Druckkontakt besteht.

**11.** Elektromechanischer Motor (A) nach einem der vorhergehenden Ansprüche, bei dem an einer Welle (2) mehrere Motoreinheiten mit jeweils einem Antriebsring (11) benachbart angeordnet sind.

**12.** Elektromechanischer Motor (A) nach Anspruch 11, bei dem zwei äußere Antriebsringe (11,13) gekoppelt sind und ein dritter Antriebsring (12) zwischenliegend auf der Welle (2) positioniert ist.

**13.** Verfahren zum Betrieb eines elektromechanischen Motors nach einem der Ansprüche 1 bis 12, bei dem

- in Ausgangsstellung der Antriebsring (11) auf die Welle (2) gedrückt wird,
- während des Betriebs durch eine zeitlich versetzte Betätigung der elektromechanischen Antriebselemente (31, 32, 33) der Antriebsring (11) umlaufend verschoben wird, so dass durch einen Kraftübertag vom Antriebsring (11) die Welle (2) gedreht wird.

**14.** Verfahren nach Anspruch 13, bei dem

- zwei elektromechanische Antriebselemente (31,32) innerhalb einer Bewegungsebene des Antriebsrings (11) um einen Winkel (α) von annähernd 90° zueinander versetzt sind,
- die zwei elektromechanische Aktoren (31,32) druckvorgespannte Piezoaktoren (3) sind,
- in Ausgangsstellung der Hub der Piezoaktoren (3) minimal ist und ein dauernder Druckkontakt zwischen Antriebsring (11) und Welle (2) besteht,
- während des Betriebs der Hub der Piezoaktoren (3) sinusförmig und zeitlich um annähernd 90° versetzt auf die Antriebswelle (11) aufgebracht wird.

**15.** Verfahren nach Anspruch 13 oder 14, bei dem mindestens zwei elektromechanische Motoren (A) eine Welle (2) antreiben.

**16.** Verwendung des elektromechanischen Antriebs (A) gemäß einem der Ansprüche 1 bis 10 als Stellantrieb.

## Claims

**1.** Electromechanical motor (A), having,

- at least two electromechanical drive elements (31, 32, 33),
- at least one drive ring (11) that can be excited by a stroke of the electromechanical drive elements (31, 32, 33) to a revolving shifting,
- a shaft (2) that can be fitted to the drive ring (11) in such a way that if the drive ring (11) is shifted, the shaft (2) can rotate, **characterized in that**

at least one drive ring (11) is welded to the drive elements (31, 32, 33).

**2.** Electromechanical motor (A) according to Claim 1 in the case of which at least two electromechanical drive elements (31, 32, 33) can be driven by piezoactors (3).

**3.** Electromechanical motor (A) according to one of the Claims 1 or 2 in the case of which

- the drive ring (11) is circular and

- at least two electromechanical drive elements (31, 32, 33) are fitted to the drive ring (11) in such a way that their specific stroke acts radially on the drive ring (11).

**4.** Electromechanical motor (A) according to one of the Claims 1 to 3 in the case of which two electromechanical drive elements (31, 32) are shifted at an angle (α) of approximately 90° to each other within a moving plane of the drive ring (11).

**5.** Electromechanical motor (A) according to one of the Claims 1 to 3 in the case of which more than two electromechanical drive elements (31, 32, 33) are shifted at an angle (α) which is approximately constant within a moving plane of the drive ring (11) to each other.

**6.** Electromechanical motor (A) according to one of the Claims 1 to 5 in the case of which the shaft (2) is within the drive ring (11).

**7.** Electromechanical motor (A) according to one of the Claims 1 to 5 in the case of which the shaft (2) is outside the drive ring (11).

**8.** Electromechanical motor (A) according to one of the previous Claims in the case of which between at least one of the at least two electromechanical drive elements (31, 32, 33) and the drive ring (11) there is a stroke converter, particularly a lever converter.

**9.** Electromechanical motor (A) according to one of the previous Claims in the case of which compared to at least one of the at least two electromechanical drive elements (31, 32, 33), a spring element (15) is attached to the drive ring (11).

**10.** Electromechanical motor (A) according to one of the previous Claims in the case of which between the drive ring (11) and the shaft (2) there is a continuous contact pressure.

**11.** Electromechanical motor (A) according to one of the previous Claims in the case of which a number of motor units with one drive ring (11) are in each case fitted adjacently to a shaft (2).

**12.** Electromechanical motor (A) according to Claim 11 in the case of which two outer drive rings (11, 13) are coupled and a third drive ring (12) is positioned in between them on the shaft (2).

**13.** Method for operating an electromechanical motor according to one of the Claims 1 to 12 in the case of which

- in the starting position, the drive ring (11) is pressed against the shaft (2),

- during operation, by activating the electromechnical drive element (31, 32, 33) shifted in time, the drive ring (11) is shifted in a revolving way so that the shaft (2) rotates by means of a power transmission from the drive ring (11).

**14.** Method according to Claim 13 in the case of which

- two electromechanical drive elements (31, 32) are shifted at an angle ($\alpha$) of approximately 90° to each other within a moving plane of the drive ring (11),

- the two electromechanical actors (31, 32) are prestressed piezoactors (3),

- in the starting position, the stroke of the piezoactors (3) is at a minimum and there is a continuous contact pressure between the drive ring (11) and the shaft (2),

- during operation, the stroke of the piezoactors (3) is shifted sinusoidally and in time by approximately 90° and applied to the drive shaft (11).

**15.** Method according to Claim 13 or 14 in the case of which at least two electromechanical motors (A), drive a shaft (2).

**16.** Using the electromechanical drive (A) according to one of the Claims 1 to 10 as an actor.

**Revendications**

**1.** Moteur électromécanique (A), comportant

- au moins deux éléments d'entraînement électromécaniques (31, 32, 33),
- au moins une bague d'entraînement (11) pouvant être excitée par une course des éléments d'entraînement électromécaniques (31, 32, 33) pour décrire un mouvement de déplacement tournant,
- un arbre (2) pouvant être monté sur la bague d'entraînement (11) de sorte que l'arbre (2) peut être mis en rotation du fait du mouvement de déplacement de la bague d'entraînement (11), **caractérisé en ce que**

l'au moins une bague d'entraînement (11) est soudée aux éléments d'entraînement (31, 32, 33).

**2.** Moteur électromécanique (A) selon la revendication 1, dans lequel les au moins deux éléments d'entraînement électromécaniques (31, 32, 33) peuvent être entraînés par des actionneurs piézo (3).

**3.** Moteur électromécanique (A) selon l'une des revendications 1 ou 2, dans lequel

- la bague d'entraînement (11 ) est circulaire et
- les au moins deux éléments d'entraînement électromécaniques (31, 32, 33) sont montés sur la bague d'entraînement (11) de manière telle que leur course respective agit radialement sur la bague d'entraînement (11).

**4.** Moteur électromécanique (A) selon l'une des revendications 1 à 3, dans lequel deux éléments d'entraînement électromécaniques (31, 32) sont décalés d'un angle ($\alpha$) d'approximativement 90° l'un par rapport à l'autre à l'intérieur d'un plan de mouvement de la bague d'entraînement (11).

**5.** Moteur électromécanique (A) selon l'une des revendications 1 à 3, dans lequel plus de deux éléments d'entraînement électromécaniques (31, 32, 33) sont décalés d'un angle ($\alpha$) approximativement constant les uns par rapport aux autres à l'intérieur d'un plan de mouvement de la bague d'entraînement (11).

**6.** Moteur électromécanique (A) selon l'une des revendications 1 à 5, dans lequel l'arbre (2) se trouve à l'intérieur de la bague d'entraînement (11).

**7.** Moteur électromécanique (A) selon l'une des revendications 1 à 5, dans lequel l'arbre (2) se trouve à l'extérieur de la bague d'entraînement (11).

**8.** Moteur électromécanique (A) selon l'une des revendications précédentes, dans lequel il y a, entre au moins l'un des au moins deux éléments d'entraînement électromécaniques (31, 32, 33) et la bague d'entraînement (11), un transmetteur de course, et plus particulièrement un transmetteur à levier.

**9.** Moteur électromécanique (A) selon l'une des revendications précédentes, dans lequel un élément à ressort (15) est fixé à la bague d'entraînement (11) à l'opposé d'au moins l'un des au moins deux éléments d'entraînement électromécaniques (31, 32, 33).

**10.** Moteur électromécanique (A) selon l'une des revendications précédentes, dans lequel il y a un contact permanent par pression entre la bague d'entraînement (11) et l'arbre (2).

**11.** Moteur électromécanique (A) selon l'une des revendications précédentes, dans lequel plusieurs unités moteur avec respectivement une bague d'entraînement (11) sont disposées sur un arbre (2) de manière voisine.

**12.** Moteur électromécanique (A) selon la revendication 11, dans lequel deux bagues d'entraînement extérieures (11, 13) sont couplées et une troisième bague d'entraînement intermédiaire (12) est positionnée sur l'arbre (2).

**13.** Procédé d'exploitation d'un moteur électromécanique selon l'une des revendications 1 à 12, dans lequel

- la bague d'entraînement (11 ), en position initiale, est pressée sur l'arbre (2),
- la bague d'entraînement (11), en cours de fonctionnement, subit un déplacement tournant du fait d'un actionnement des éléments d'entraînement électromécaniques (31, 32, 33) décalé dans le temps, de sorte que l'arbre (2) subit une rotation par une transmission de force de la bague d'entraînement (11 ).

**14.** Procédé selon la revendication 13, dans lequel

- deux éléments d'entraînement électromécaniques (31, 32) sont décalés d'un angle ($\alpha$) d'approximativement 90° l'un par rapport à l'autre à l'intérieur d'un plan de mouvement de la bague d'entraînement (11);
- les deux actionneurs électromécaniques (31, 32) sont des actionneurs piézo (3) sous précontrainte par pression;
- dans la position initiale, la course des actionneurs piézo (3) est minimale et il y a un contact permanent par pression entre la bague d'entraînement (11 ) et l'arbre (2);
- en cours de fonctionnement, la course des actionneurs piézo (3) est sinusoïdale et appliquée sur l'arbre moteur (11) avec un décalage temporel d'approximativement 90°.

**15.** Procédé selon la revendication 13 ou 14, dans lequel au moins deux moteurs électromécaniques (A) entraînent un arbre (2).

**16.** Utilisation de l'entraînement électromécanique (A) selon l'une des revendications 1 à 10 en tant que servomoteur.

FIG 1

10.1
31
2
11
9
6.1
3
7.1
8.1
5.1
4
6.2
5.2
8.2
32
3
9
4
10.2
7.2
1

FIG 2

2
$d_R$
31
10.1
11
9
6.1
3
5.1
7.1
8.1
4
6.2
$d_M$
5.2
8.2
32
3
9
4
10.2
7.2
1

FIG 3
I Quadrant
2
IV Quadrant
10.1
31
11
9
5.1
3
6.1
7.1
8.1
4
6.2
II Quadrant
III Quadrant
5.2
8.2
32
3
9
4
10.2
7.2
1

FIG 4

2
11
10.1
31
9
6.1
3
5.1
7.1
8.1
4
6.2
5.2
8.2
32
3
9
4
10.2
7.2
1

FIG 5
2
11
31
10.1
9
6.1
3
5.1
7.1
8.1
4
6.2
5.2
8.2
32
3
9
4
10.2
7.2
1

FIG 6
2
11
31
10.1
9
6.1
3
5.1
7.1
8.1
4
6.2
5.2
8.2
32
3
9
4
10.2
7.2
1

FIG 7A
PMA 3.1: UPMA3.1(t)=U0·{1+sin(Ψ(t)+(3/2)·π)}
PMA 3.2: UPMA3.2(t)=U0·{1+sin(Ψ(t)+π)}
U0
0,5·U0
0
Piezospannung [Volt]
0
90
180
270
360
450
540
630
720
Pasenwinkel Ψ (t) [Grad]
Fig 1
Fig 3
Fig 4
Fig 5
Fig 6

erreichbares Gebiet
Fig 5
reduziertes Dreh/Haltemoment
Freilauf
Fig 4
Fig 6
Fig 1
U0
0,5·U0
0
Fig 3
Ruhestellung
Amplitude PMA 3.2
φ(t)
0 0,5·U0 U0
Amplitude PMA 3.1
FIG 7B

FIG 8
15
2
11
10.1
31
9
6.1
15
3
5.1
7.1
4
8.1
6.2
5.2
32
8.2
3
9
4
10.2
7.2
1

33
11
5
8
4
7
3
2
9
6
32
10
31
1
FIG 9

FIG 10B
15
10
16
17
FIG 10A
7
10
4
8
3
5
15
10
16
6
17
2
11
16
17
FIG 10C
16
10
15

FIG 11

1.2
10
7
1.1
4
8
5
3
6
9
11
2

FIG 12A
FIG 12B
Schnitt A-A
A
A
1.1
1.2
2
7
11
12
2
3.1
3.2
4.1
4.2
5.1
5.2
6.1
6.2
7.1
7.2
8.1
8.2
9
9
10.1
10.2
11
12

FIG 13A
FIG 13B
Schnitt A-A
A
A
1.1
1.2
2
3
4.2
5
6
7
8
9
10
11
12
13

FIG 14
4
9
3
8
13
6
5
2
13
12
11
1.2
7
1.1

1
12
11
7
4
8
6
10
9
3
5
2
1.1
1.2
A
12
7
4
3
9
11
A

FIG 15A

FIG 15B

FIG 16A
FIG 16B
FIG 16C
FIG 16D
FIG 16E
FIG 16F
2
11